# EUROPEAN PATENT APPLICATION

(11) **EP 2 037 427 A1**
(43) Date of publication of application: **18.03.2009**
(21) Application number: 07017914.8
(22) Date of filing: 12.09.2007
(51) Int. Cl.: G08C 17/00, G10L 15/22

(54) **Interface device for user communication with a controller and method for inputting commands to a controller**

(71) Applicant: SIEMENS AKTIENGESELLSCHAFT, 80333 München (DE)
(72) Inventor: Jensen, Michael, Hald Ege, 8800 Viborg (DE)

(57) **Abstract**

An interface device for user communication with a controller (11), comprises: a controller interface (13), by which the interface device can be connected to the controller (11) for sending commands and/or data to and receiving commands and/or data from the controller (11); a processor arrangement (21) which is connected to the controller interface (13) and adapted to produce commands and/or data for the controller (11) and to interpret commands and/or data received from the controller (11) and to output a received command signal representing an interpreted command and/or a received data signal representing the interpreted data; a speech recognition unit (17) which is adapted for translating electrical signals representing orally input commands or data into an input command signal or input data signal and which is connected to the processor arrangement (21) for sending the input command signal or input data signal to the processor arrangement (21); a microphone (7) allowing an oral command input and/or an oral data input to the interface device the microphone (7) being adapted to convert an orally input command or orally input data to an electrical signal representing said orally input command or said orally input data and being connected to the speech recognition unit (17) for delivering the electrical signal to the speech recognition unit (17); and
- an output unit (15, 19) which is connected to the processor arrangement (21) for receiving commands or data and which is adapted to produce a user output representing a command and/or data received from the processor arrangement (21); The processor arrangement (21) comprises a command manager (23) which is adapted to produce, upon receipt of an input command signal, a reproduction signal representing the received input command signal in a form which is appropriate to be recognised by the user and a confirmation request signal, to deliver the reproduction signal and the confirmation request signal to the output unit (15, 19), and to further process the received input command signal only upon receipt of a confirmation by the user.

## Description

The present invention relates to an interface device for user communication with a controller such as, for example, a controller for a wind turbine. In addition, the present invention relates to a method for inputting commands into such a controller in which a command is orally input.

When service or maintenance is carried out on an installation, such as a wind turbine in the field, a service technician usually uses one or more handheld tools such as, for example, a laptop. He uses a keyboard or a mouse and a screen to communicate with the controller and thereby needs at least one hand to operate the laptop in order to acquire information from a controller of the installation or to send a command to this controller.

From CA 2 133 001 C a control system for a service system for a motor vehicle is known which comprises a microphone by means of which a technician can input commands to the service system and the service system can output information, for example about required actions, to the technician. Moreover, the system can comprise an image projection device which projects data from the system control device within the field of vision of the technician. This system generally offers the possibility to carry out service or maintenance without the need for a handheld device.

US 2002/0138269 A1 describes a method of performing an inspection routine in which a portable computer is used to which the complete inspection routine, including drawings and diagrams to illustrate the inspection criteria, is loaded. The portable computer is capable of text to speech voice synthesis and voice recognition. Hence, the interaction between the technician and the computer can be performed by speech.

With respect to the mentioned prior art it is an objective of the present invention to provide an improved interface device for user communication with a controller and an improved method for inputting commands to the controller.

This objective is solved by an interface device as claimed in claim 1 and by a method for inputting commands to a controller as claimed in claim 10. The depending claims describe further developments of the invention.

An inventive interface device for user communication with a controller comprises a controller interface, a processor arrangement, a speech recognition unit, a microphone and an output unit. By the controller interface the interface device can be connected to a controller for sending commands and/or data to, and receiving commands and/or data from the controller. The processor arrangement is connected to the controller interface and adapted to produce commands and/or data for the controller and to interpret commands and/or data received from the controller. Moreover, the processor arrangement is adapted to output a received command signal representing an interpreted received command and/or a received data signal representing the interpreted received data. The speech recognition unit is adapted for translating electrical signals representing orally input commands for data into an input command signal or input data signal. The speech recognition unit is connected to the processor arrangement for sending the input command signal or input data signal to the processor arrangement. The microphone allows an oral command input and/or an oral data input to the interface device. It is adapted to convert an orally input command or orally input data to an electrical signal representing said orally input command or said orally input data and is connected to the speech recognition unit for delivering the electrical signal to the speech recognition unit. The output unit is connected to the processor arrangement for receiving commands or data from it and is adapted to produce a user output representing a command and/or data received from the processor arrangement. The processor arrangement of the inventive interface device comprises a command manager which is adapted to produce, upon receipt of an input command signal, a reproduction signal representing the received input command signal in a form which is appropriate to be recognised by the user and a confirmation request signal. The command manager is further adapted to deliver the reproduction signal and the confirmation request signal to the output unit and to further process the received input command signal only upon receipt of confirmation by the user.

The output unit may, in particular, comprise an acoustic output device for producing an acoustic output. In this case, the output unit advantageously further comprises a speech generator. This implementation allows for speech output of the interface device. The acoustic output device and the microphone may be integrated into a headset. Moreover, in addition or alternatively to the acoustic output device, the output unit may comprise a visual output device, such as a display, for producing a visual user output. Such a visual user output is advantageous if data is to be output to the user as the visual output device allows for displaying, for example, diagrams or formulas which are difficult to represent in spoken word. To allow for inputting data which is not easily input orally the interface device may further comprise a console, for example a keyboard, for the manual input of commands and/or data. The console may, in particular, be realised in the form of a touch screen so that the console and the display can be integrated into a single device.

The inventive interface device offers an advantage over the mentioned prior art in that the user gets feedback on an orally input command. The feedback may be either acoustic or visual. The feedback comprises the mentioned reproduction signal representing the command originally input by the user and a request for confirmation of the command. As the reproduction signal is produced from the input command signal output by the speech recognition unit, i.e. from a signal which results from the interpretation of the orally input command by the speech recognition unit, the user can countercheck on the basis of the reproduction signal whether the interpretation has been performed correctly by the speech recognition unit. If the user recognises a correct interpretation of his orally input command he can confirm the command so that the processing of the command can proceed. In case the user recognises that the interpretation made by the speech recognition unit is incorrect he would not confirm the command so that the processing of the command would not proceed. Therefore, the number of processed misinterpreted commands can be reduced with the inventive interface device as compared to the state of the art devices. The recognition signal, as well as the request for confirmation, can either be output acoustically or visually. Of course it would also be possible to simultaneously output one or both of the signals acoustically as well as visually. This would provide further redundancy which further increases the resistance of the interface device against the processing of incorrectly interpreted oral inputs.

Since a misinterpretation of commands which are input via the console is much less likely than a misinterpretation of orally input commands, the command manager may be adapted to further process a command or data input via the console without producing a reproduction signal representing the input command signal and without a confirmation request signal. By this measure unnecessary confirmation steps can be avoided.

The processor arrangement of the inventive interface device may further comprise a task manager which is connected intermediately between the command manager and the controller interface. The task manager is adapted to further process an input command signal or an input data signal and to produce said commands and/or data for the controller.

The microphone may be wirelessly connected to the speech recognition unit and/or the acoustic or visual output device may be wirelessly connected to the output unit and/or the console may be wirelessly connected to the console interface. By using the wireless connection restricting the technician's ability to move around can be avoided.

In an inventive method for inputting commands to a controller a command is orally input by a user. The orally input command is transformed into an electrical signal representing the orally input command. The electrical signal is then transformed into an input command signal. Moreover, the input command signal is transformed into a reproduction signal representing the input command signal in a form which is appropriate to be recognised by the user and the reproduction signal is output to the user together with a request to confirm the input command signal. The input command signal is further processed and output to the controller only upon receipt of the requested confirmation from the user. The described method can be performed from the inventive interface device. The advantages which are provided by the inventive method have already been described in the context of the interface device.

The confirmation may either be given orally or visually. The reproduction signal and/or the request to confirm the input command signal may be output by speech or in visual form.

Further features, properties and advantages of the present invention will become clear from the following description of embodiments in conjunction with the accompanying drawings.
Figure 1 shows an embodiment for the inventive interface device in the form of a block diagram.
Figure 2 shows the operation states of the device shown in Figure 1.
Figure 3 shows a flow chart for the execution of a command orally input to the device shown in Figure 1.

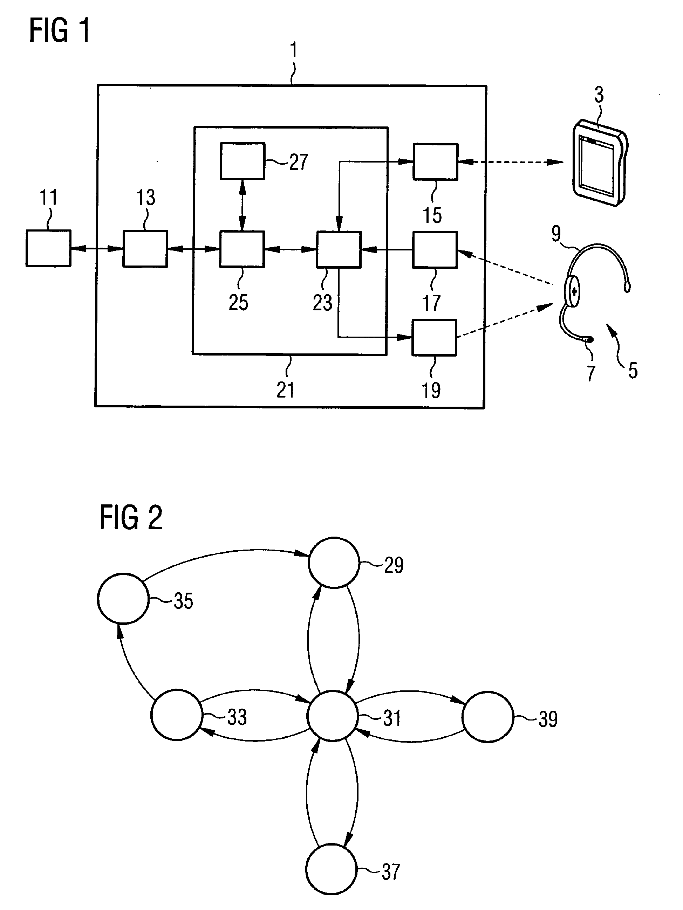

The inventive device will now be described in conjunction with the block diagram of Figure 1. The block diagram shows an inventive interface unit which comprises a central unit 1, a wireless touch screen 3 and a wireless headset 5 comprising a microphone 7 and earphones 9. While the wireless touch screen 3 serves as a console for inputting data and commands as well as a display for displaying data retrieved from a controller 11 of a wind turbine, the headset serves as a microphone allowing an oral command input or an oral data input to the interface device and as an acoustic output device for producing an acoustic output of the interface device. The interface device is connected to the controller 11 for a wind turbine. The interface device can be used to retrieve data from the turbine controller 11 and to input commands and/or data into the turbine controller 11 during a service or maintenance procedure.

The central unit 1 comprises a controller interface 13, a console interface 15, a speech interpreter in the form of a speech recognition unit 17 and a synthetic speech generator in the form of a speech synthesiser 19. The main part of the central unit 1 is given by a processor arrangement 21. This processor arrangement includes a command manager 23, a task manager 25 and storage 27 in which applications for the central unit 1 are stored. The central unit 1 may also be referred to as a turbine interface computer.

In the central unit 1, the controller interface 11 is connectable to the controller 11 for sending commands and/or data to and receiving commands and/or data from the controller 11. Data and/or commands received from the controller 11 are given out by the controller interface 13 to the processor arrangement 21. On the other hand, commands and/or data for the controller 11 that are produced by the processor arrangement 21 are given out to the controller interface 13 which then sends these commands and/or data to the controller 11.

Commands for the controller 11 are generated by the processor arrangement 21 on the basis of an oral command input through the microphone 7 of the headset 5. Such an oral command input is sent wirelessly to the speech recognition unit 17 which is connected to the processor arrangement 21. Commands which are orally input to the microphone 7 are transformed into electromagnetic signals which are received by the speech recognition unit 17. The speech recognition unit 17 then interprets the oral command and translates the electrical signals representing the orally input commands into a binary input command signal which is then sent to the processor arrangement 21. In the same manner orally input data will be transformed by the speech recognition unit 17 into an input data signal which is given out to the processor arrangement 21.

In addition to inputting oral commands through the microphone 7 commands can also be input through the touch screen 3 which are then wirelessly transmitted to the console interface 15. From there the commands or data input through the console 3 are given out to the processor arrangement 21.

On the other hand, data or commands which shall be provided for the user can be given out by the processor arrangement 21 to the console interface 15 which then transmits the command and/or data wirelessly to the touch screen 3. In addition, commands and/or data can also be given out by the processor arrangement 21 to the speech synthesiser 19 which is also connected to the processor arrangement 21 for producing a speech output representing the commands and/or data. This output is then wirelessly transmitted to the earphones 9.

With the headset 5 and the touch screen 3 a user performing a service or maintenance work has the opportunity to choose between communicating with the central unit 1 by speech or by using a console, namely the touch screen 3. However, in many cases the combined use of speech and the console would be appropriate since representing data retrieved from the controller 11 by speech can be very unsatisfying. In this case data will preferably be visualised on the touch screen 3.

In the processor arrangement 21, which can either be implemented as a single processor unit comprising subsections or as a combination of individual processor units, the command manager 23 is connected to the console interface 15 for sending data and/or commands to be displayed on the touch screen 3 and for receiving data and/or commands input through the touch screen 3. In addition, the command manager 23 is connected to the speech recognition unit 17 for receiving input command signals and/or input data signals based on an oral command or data input through the microphone 7. Commands and/or data which are to be output to the user through the earphones 9 are sent from the command manager 23 to the speech synthesiser 19 which then sends the commands and/or data wirelessly to the earphones 9.

The command manager reacts to an input from the service technician which is received from the touch screen or the headset, initiates the proper action and leads the response back to the technician. According to the desired task ordered by the service technician, the command manager activates the task manger 25 which is connected to the command manager 23 for receiving commands and data from the command manager 23 and for sending commands and data retrieved from the controller 11 to the command manager 23. Upon receiving a command from the command manager 23 the task manager retrieves an application stored in the storage 27 and outputs the respective commands and data to the controller interface 13 which then transmits the commands and data to the controller 11. In the present embodiment, applications can be input to or deleted from the storage device 27 through the task manager 25. The term "application" covers internal applications and tasks executed on a turbine controller. The status feedback from the process which will be received from the controller 11 is then led back to the service technician through the task manager 25 and the command manager 23. The status feedback can be displayed on the touch screen 3 or can be output acoustically through the earphones 9.

To summarise, the console interface 15, which serves as a graphical user interface manager, is responsible for keeping track of the display menus and the service technician's input and output carried out on the touch screen 3. Inputs from the service technician are transported through the console interface 15 to the command manager 23 and the response is guided back by the console interface to the touch screen 3. The speech recognition unit 17 interprets commands from the service technician and translates all oral inputs from the service technician into a set of commands which is sent to the command manager 23. The task manager 25 acts as an interface between the command manager and the applications for the turbine controller. It receives a desired action from the command manager, initiates and monitors the process and finally reports a response upon the action back to the command manager 23.

The operation of the system will now be described with respect to Figure 2. All requests to the interface device are mapped into two command types. The first command type is a simple command while the second command type is a parametric command. Simple commands cover actions not requiring any additional information. For example, start and stop operations are commands which fall into the category of simple commands. Parametric commands cover actions requiring additional information. For example, set point commands can be parametric commands where the command type and value or a number of values must be entered.

For safety reasons, the interface device may support a so-called "dead man button". The purpose of this safety feature is to ensure communication channels and system units are operating correctly at all times. The system requests the service technician to announce his presence by entering specific commands at regular intervals.

The operation states of the interface device include inactive 29, idle 31, watchdog 33, which is the operation state supporting the "dead man button", command 39, operator information 37 and error 35. The initial state of the interface device is inactive 29. This state is left by the login of a service technician with a user name and password which will be entered through the touch screen 3. After login, the interface device will change to the idle state 31. The interface device also returns to the idle state 31 after carrying out any process task. The idle state 31 can be left in four different ways. The first way is to logout of the interface device, the second way is to enter a command, the third way is a timeout which activates the watchdog state and the fourth way is information that is sent from the interface device to the service technician, for example in the case of an error.

The watchdog state 33 represents the "dead man button" function. At regular intervals the operator must announce his presence to the system. Upon receiving an announcement of presence, for example by a special input provided by the service technician, the interface device returns from the watchdog state 33 to the idle state 31. If the special input is not received in a predetermined time interval, the interface device enters the error state 35. In the error state 35 the controller 11 sets the wind turbine into a safe operation mode and terminates the interface device after completing the safe operation mode of the wind turbine. With the termination the interface device changes from the error state 35 to the inactive state 29.

The command state 39 is entered whenever the service technician inputs a command or data either through the microphone 7 or the touch screen 3. The interface device returns from the command state 39 to the idle state 31 after completing the task requested by the service technician.

During the idle state 31 the system might need to inform the service technician of a status change, typically in error situations. In such a case the idle state 31 is left for the operator info state 37 in which the information is given to the service technician either through the display of the touch screen 3 or through the earphones 9. After the information has been completely transmitted to the service technician, which may be defined as to be given by an operator acknowledgement, for example by pressing a key or a special oral acknowledgement, the operator info state 37 is left again and the interface device returns to the idle state 31.

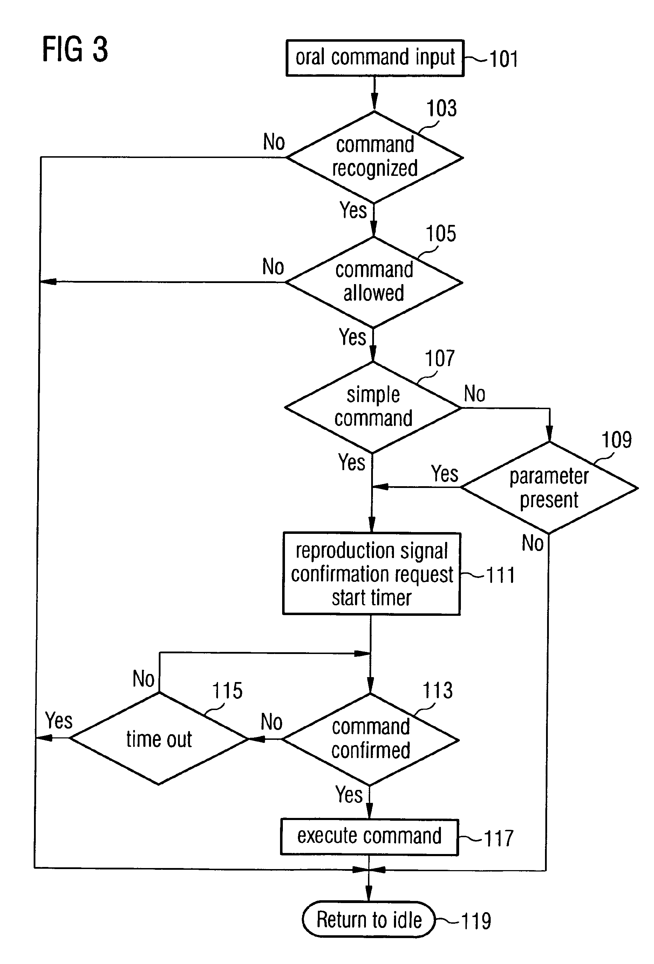

The processing of an oral command input to the interface device in the command state 39 will now be described with respect to Figure 3 which shows a flow diagram of the processing of the oral command.

After an oral command has been input to the interface device through the microphone 7 in step 101 a command interpretation is performed by the speech recognition unit 17 in step 103. If the interpretation is not successful the interface device returns in step 119 to the idle state 31. It may then enter the operator info state 37 to inform the operator of the interpretation failure and return again to the idle state 31.

If, on the other hand, the interpretation is successful an input command signal representing the oral command input is output from the speech recognition device 17 to the command manager 23. The command manager 23 then checks in step 105 whether or not the command is allowed. In case it is not allowed, the interface device returns in step 119 to the idle state 31. It may optionally enter the operator info state 37 to inform of the command not being allowed and then return to the idle state 31.

If the command is allowed, the command manager 23 proceeds to step 107 in which it checks whether the command is a simple command requiring no parameter input or a parametric command requiring a parameter input. If a parameter input is required, the interface device proceeds to step 109 in which the command manager 23 checks whether the required parameter or the required parameters are present. If not, the interface device returns to the idle state and optionally informs the operator of the missing parameter(s). If the required parameter or parameters are present, the command manager proceeds to step 111. The command manager 23 also proceeds directly to step 111 from 107 if it detects in step 107 that the command is a simple command requiring no parameter input.

After the command has been successfully interpreted, is allowed and, if necessary, all parameters are present, the command manager 23 issues a reproduction signal in which it reproduces the input by the system technician in a form which is recognisable by the technician. This reproduction signal is then output to the touch screen 3 via the console interface 15 or to the earphones 9 via the speech synthesiser 19. In addition, the command manager issues a request for confirmation of the command displayed on the touch screen or given out acoustically through the earphones 9. In the simplest case, the request for confirmation can be setting a waiting time during which the confirmation has to be given by the service technician without outputting an explicit confirmation request to the service technician. However, an explicit acoustic or visual request for confirmation of the command can be output to the service technician as well.

After the command manager 23 has started a timer in step 111 it awaits confirmation of the command 113. If the command manager 23 receives no confirmation the interface device proceeds to step 115 in which the command manager 23 checks whether the time for confirming the command has run out or not. In case the time has not run out the interface device returns to step 113. If, on the other hand, the command manager 23 detects time out in step 115 the interface device returns in step 119 to the idle state 31 and optionally informs the technician of the time out.

If the command is confirmed in time in step 113, the interface device proceeds to step 117 in which the command is further processed by the task manager 25 and the application initiated by the command is performed. After the application has been finished, the interface device returns to the idle state 119. The confirmation can, for example, be carried out by repeating the oral command, by saying "command confirmed" or by pressing a special button on the touch screen. However, other ways of confirming the command are also conceivable.

The inventive interface device in particular provides a wireless headset for oral commands, an audio feedback response and a portable screen for visibly displaying commands and results together with a central unit or turbine interface computer for carrying out the commands. Although the display has been described as being a touch screen in the embodiment, a simple display which does not allow any input to the interface device would be, in principle, sufficient. In this case, all inputs would be performed orally or a further console, such as a keyboard, could be present as a further device.

The inventive interface device provides a flexible and easy to use man-machine interface with speech dialogue solutions in conjunction with portable input and output units which may, in particular, be wireless. This facilitates the service and maintenance of an installation such as the exemplarily described wind turbine by establishing a natural way of communicating with the interface device due to spoken commands and oral and/or visual responses. Moreover, if the input and output devices for the service technician are wireless, the service technician has a maximum motion flexibility in the service or maintenance situation since no disturbing cables are present. At the same time the service technician is still on top of the service or maintenance process.

## Claims

1. An interface device for user communication with a controller (11), comprising:
- a controller interface (13), by which the interface device can be connected to the controller (11) for sending commands and/or data to and receiving commands and/or data from the controller (11);
- a processor arrangement (21) which is connected to the controller interface (13) and adapted to produce commands and/or data for the controller (11) and to interpret commands and/or data received from the controller (11) and to output a received command signal representing an interpreted command and/or a received data signal representing the interpreted data;
- a speech recognition unit (17) which is adapted for translating electrical signals representing orally input commands or data into an input command signal or input data signal and which is connected to the processor arrangement (21) for sending the input command signal or input data signal to the processor arrangement (21);
- a microphone (7) allowing an oral command input and/or an oral data input to the interface device the microphone (7) being adapted to convert an orally input command or orally input data to an electrical signal representing said orally input command or said orally input data and being connected to the speech recognition unit (17) for delivering the electrical signal to the speech recognition unit (17); and
- an output unit (15, 19) which is connected to the processor arrangement (21) for receiving commands or data and which is adapted to produce a user output representing a command and/or data received from the processor arrangement (21);
wherein
the processor arrangement (21) comprises a command manager (23) which is adapted
- to produce, upon receipt of an input command signal, a reproduction signal representing the received input command signal in a form which is appropriate to be recognised by the user and a confirmation request signal,
- to deliver the reproduction signal and the confirmation request signal to the output unit (15, 19), and
- to further process the received input command signal only upon receipt of a confirmation by the user.

2. The interface device as claimed in claim 1, wherein the output unit (15, 19) comprises an acoustic output device (9) for producing an acoustic user output.

3. The interface device as claimed in claim 2, wherein the output unit (15, 19) comprises a speech generator (19).

4. The interface device as claimed in claim 2 or claim 3, wherein the acoustic output device (9) and the microphone (7) are integrated into a head set (5).

5. The interface device as claimed in any of the claims 1 to 4, wherein the output unit (15, 19) comprises a visual output device (3) for producing a visual user output.

6. The interface device as claimed in any of the claims 1 to 5, further comprising a console (3) for a manual input of commands and/or data and a console interface (15) connected intermediately between the console (3) and the processor arrangement (21).

7. The interface device as claimed in claim 5 and claim 6, wherein the console is a touch screen (3).

8. The interface device as claimed in claim 7, wherein the command manager (23) is adapted to further process a command or data input via the console (3) without producing a reproduction signal representing the input command signal and a without producing a confirmation request signal.

9. The interface device as claimed in any of the claims 1 to 8, in which the processor arrangement (21) further comprises a task manager (25) which is connected intermediately between the command manager (23) and the controller interface (13) and which is adapted to further process an input command signal or an input data signal and to produce said commands and/or data for the controller.

10. The interface device as claimed in any of the claims 1 to 9, in which the microphone (7) is connected wireless to the speech recognition unit and/or the acoustic output device (9) is connected wireless to the output unit and/or the console (3) is connected wireless to the console interface.

11. A method for inputting commands to a controller (11) in which
- a command is orally input by a user,
- the orally input command is transformed into an electrical signal representing the orally input command,
- the electrical signal is transformed into an input command signal,
- the input command signal is transformed into a reproduction signal representing the input command signal in a form which is appropriate to be recognised by the user,
- the reproduction signal is output to the user together with a request to confirm the input command signal, and
- the input command signal is further processed and output to the controller (11) only upon receipt of the requested confirmation from the user.

12. The method as claimed in claim 10, in which the confirmation is to be given orally.

13. The method as claimed in claim 10 or claim 11, in which the reproduction signal and/or the request to confirm the input command signal are output by speech.

14. The method as claimed in any of the claims 10 to 12, in which the reproduction signal and/or the request to confirm the input command signal are output in visual form.
